# EUROPEAN PATENT SPECIFICATION

(11) **EP 2 141 132 B1**
(45) Date of publication and mention of the grant of the patent: **05.12.2012**
(21) Application number: 09164355.1
(22) Date of filing: 01.07.2009
(51) Int. Cl.: C03B 29/08

(54) **Furnace**
Ofen
Four

(30) Priority: 02.07.2008 EP 08159518
(43) Date of publication of application: 06.01.2010
(73) Proprietor: Astero, 1325 Chaumont-Gistoux (BE)
(72) Inventor: Helsen, Marie Madeleine, 1325 Chaumont-Gistaux (BE)
(74) Representative: Farmer, Guy Dominic

(56) References cited:
- DE-A1-102005 047 433
- US-A1- 2002 134 109
- US-A1- 2006 248 924

## Description

This invention relates to glass furnaces, particularly to horizontal furnaces for heating glass sheets for tempering (often referred to as glass tempering furnaces).

One particular type of glass tempering furnace to which the invention is applicable comprises:
- a conveyor upon which a glass sheet is transported within the furnace, the conveyer comprising a series of rollers, generally ceramic or ceramic faced rollers;
- heating elements arranged within the furnace to heat the upper surface of a glass sheet being transported by the conveyor by radiation; and
- heating elements arranged within the furnace to heat the lower surface of the glass sheet being transported by the conveyor by radiation.

The direction in which the glass sheets travel within the furnace is referred to as the longitudinal axis of the furnace; this generally corresponds to the length of the furnace. The axis of each roller of the conveyor is substantially perpendicular to the longitudinal axis of the furnace.

The invention is particularly applicable to oscillating furnaces in which the glass sheets move backwards and forwards within the furnace during the heating cycle; this oscillation is intended to assist avoiding undesired localised overheating of glass sheet and may be a full oscillation (ie an oscillating movement over the full length of the furnace) or a partial oscillation (ie an oscillation over a portion of the full length of the furnace). The invention is particularly applicable for architectural glass furnaces; such a furnace may have a length which is at least 2m, 3 m or 3.5 m and/or which is not more than 15 m or 12 m; it may have a width which is greater than 0,15, 0.2 or 0,35 and/or less than 0.75 its length.

One problem associated with this type of furnace is the difficulty of avoiding uneven heating of a glass sheet, for example due to the additional heat transmitted by the rollers of the conveyer to the lower surface of a glass sheet and/or by a difference in emissivity of the upper and lower surfaces of the glass sheet (for example when the upper surface of the glass sheet carries a low emissivity coating).

Arrangements for directing forced convection air currents at the glass sheet, particularly at the upper surface of the glass sheet, may be included in such furnaces to facilitate even heating of the glass surface and/or to improve cycle times. However, it then becomes necessary to implement an appropriate regime to combine and/or control the different heat sources within the furnace so as to ensure that the glass sheets are heated in a desired, controllable and reproducible manner.

Examples of known glass furnaces and their configurations are disclosed in US 2006/0248924 A1, US 2002/0134109 A1 and DE102005047433 A1.

One aim of the present invention is to provide a glass tempering and/or bending furnace having a system controlling the use of forced convection directed at an upper surface of the glass sheet which is simple to implement and to operate and which facilitates heating of the glass sheets such that they are substantially planar at the end of the process, and preferably during the entire heating cycle.

According to one of its aspects, the invention provides a glass sheet furnace in accordance with claim 1. Other aspects are defined in other independent claims. The dependent claims define preferred and/or alternative embodiments.

The terms high, medium and low used herein, for example in relation to the convection zones, are intended to indicate relative properties between the features described. For example, where there are three convection zones, the low convection zone is a zone at which low convective heat transfer to a glass sheet is intended to occur, the medium convective zone is a zone at which a relatively greater convective heat transfer to a glass sheet is intended to occur and the high convective heat zone is a zone at which a still greater convective heat transfer to the glass sheet is intended to occur. The relative amounts of the convective heat supplied at each convective zone may be arranged by controlling one or more parameters at each convection zone including pressure and/or speed and/or volume and/or temperature of the forced convection blasting air at the zone, particularly considered per unit area (eg per m²) of the convection zone in question. The position and/or configuration and/or number of nozzles may also be used to influence the relative amount of convective heat supplied and/or transferred at each zone. For example, at least some nozzles at the high convection zone may be in closer proximity to a glass surface to be blasted that the nozzles at other zones.

The amount of convection heat provided and/or transferred at each zone may be controlled using, and is preferably controlled essentially using, the pressure of forced convection air supplied at each convection zone.

Preferably, the system is configured such that there is greater forced convection at the centre of the furnace about a plane corresponding to the position of a glass sheet within the furnace than towards the periphery of the furnace in both a longitudinal and transverse direction.

The system is adapted to be used with the load (ie the glass sheet or sheets) to be heated being positioned symmetrically about the central longitudinal axis of the furnace. The load is considered, from a thermal perspective, as a whole, irrespective of the number of volumes (ie individual sheets of glass) it comprises as convective edge effects on each volume are substantially neutralised by the proximity of one volume to another in the load.

The relative pressure and/or relative amount of heat convection provided at the convection zones may be selected based upon the type of load to be heated.

For example, if the load consists of a single large volume (ie a single large sheet of glass) then there may be significantly greater pressure and/or amount of heat transfer between the high convection zone and the other convection zone(s). Conversely, if the load consists of a plurality of small volumes then there may be a less significant difference between the high and the other convection zone(s). The invention aims to correct or compensate for unequal heating of the load whilst inducing a temperature profile such the central zone(s) of the glass load to be heated are slightly hotter than the external zone(s). It has been noticed that, in this case, bi-stable deformation of each volume of glass from which the load is composed may be avoided and fragmentation (eg if the glass sheet(s) are broken after a subsequent quenching operation) is more regular.

Preferably, each ramp is provided with a plurality of outlets or nozzles. Arranging a ramp with high, possibly medium and low convection conduit sections facilitates installation of the ramps in the furnace and/or connection to the desired supplies of forced convection blasting air.

Preferably, the system is configured to provide a permanent low level of forced background convection through the furnace, for example when the furnace is in a stand-by mode and/or during initial heating up of the furnace to its nominal temperature. This forced background convection may be provided irrespective of whether a glass sheet it present within the furnace. This may stabilise the process and reduce or avoid the need, once a heated glass sheet has been removed, to wait for the furnace to come up to its desired stable nominal temperature before introducing the next load to be heated.

The forced convection system of the present invention may be designed into a new furnace. It is also particularly suitable for retrofitting to modify or improve an existing furnace. Preferably, the system operates independently from a furnace control system that controls, for example, the nominal temperature of the furnace and/or the oscillation of the load within the furnace. It is not necessary for any information from such a furnace control system to be transmitted to the convection control system of the present invention during the heating cycle. This facilitates retrofitting of the system of the invention.

The operating temperature of the furnace may be at least 600°C, 620°C or 650°C; it may be no more than 800°, 770 °C or 750°C.

The forced convection blasting air may be provided by a compressor, preferably fitted with filters and a dryer (dew temperature preferably about 3°C, dust filters preferably < 50 µm) and, if needed, an air reservoir to avoid frequent starting of the compressor. The nominal pressure of the compressor may be between 5 and 10 bars. The pressure at the convection zones may be between 10 Pa (for example to maintain condition of the nozzles) and 7 bars or 10 bars. Typical convection pressures for each zone during a force convection heating cycle are between 0.5 bars and 10 bars.

The convection control system preferably controls a small number of variable pressure valves, more preferable one variable pressure valve per convection zone. The outlet from each variable pressure valve may feed a small number of on/off valves. The distribution of the forced convection blasting air may be accomplished by distributors; this may facilitate the establishment of zones of uniform pressure of convection blasting air by connecting the outlets of the on/of valves to different portions of the ramps. The position of these different portions of the ramps may be defined by stops in the ramps and by the configuration of the distributors. A manual variable pressure valve preferably feed each of the distributors (which may be via an anti-return) so as to create a forced background convection in the entire furnace.

The furnace may comprise a convection control system comprising at least one glass temperature sensor positioned within the furnace and adapted to respond to the temperature of the glass sheet when the glass sheet is in the proximity of the temperature sensor with the convection control system being configured to initiate a forced convection cycle in response to a signal from the glass temperature sensor indicating a decrease in temperature detected by the glass temperature sensor due to the proximity of a glass sheet.

Where thermocouples are used, these are preferably positioned under the position of a glass sheet in the furnace.

Preferably, the furnace does not have a forced air convection system which directs force convection blasting air towards a lower surface of a glass sheet within the furnace.

The furnace may have a temperature sensor, for example, a thermocouple arranged above the level of the glass load and configured to give an indication of the presence of a low emissivity coating. If this temperature sensor indicates an increase in temperature as a glass load approaches, it may be deduced that the emissivity of the adjacent glass surface is low, ie that a low e coating is present.

This may be used by the convection control system. Similarly, such a sensor may be used to provide an indication of the thickness of the sheets of the glass load. Embodiments of the invention will now be described, by way of example only, with reference to the accompanying drawings of which:
Fig 1 is a schematic cross sectional side view of a glass sheet furnace;
Fig 2 is a schematic split cross sectional plan view of the glass sheet furnace, the left half portion showing a section taken directly above a glass sheet and the right hand section showing a section taken above the ramps (the radiation heaters not being shown in Fig 2);
Fig 3a is schematic plan view of the underside of a ramp;
Fig 3b is a schematic plan view of the underside of another ramp;
Fig 4 is a schematic cross sectional plan view of the glass sheet furnace showing the convection zones;
Fig 5 is a chart showing blasting air connections for one embodiment of the furnace;
Fig 6 is a chart showing blasting air connections for an alternative embodiment of the furnace;
Fig 7 is a chart showing a schematic representation of the rebound temperature.

The glass tempering/bending furnace 100 illustrated in the figures is 5.20 m long by 2.25 m wide and comprises:
- a series of ceramic rollers 101, whose axis of rotation is substantially perpendicular to the longitudinal axis 10 of the furnace 100
- a series of electrical lower radiation heating elements 103 positioned between and below the rollers;
- a series of electrical upper radiation heating elements 104 positioned above the rollers 101; and
- a series of forced convection ramps 105 positioned above the rollers.

The furnace is adapted to heat glass sheets having a length of up to 4m.

The rollers 101 form a furnace conveyor for transporting a sheet of glass 102 within the furnace. During passage of the glass sheet 102 through the furnace 100, the lower radiation heating elements 103 heat a lower face of the glass sheet 102 by radiation whilst the upper radiation heating elements 104 heat an upper face of the glass sheet 102 by radiation. During operation of the furnace, the rollers 101 are at or close to the nominal temperature of the furnace. Consequently, the lower surface of a glass sheet 102 entering the furnace at room temperature will also be heated by contact with the hot rollers 101. Furthermore, the glass sheet 102 will receive heat from contact with the hot air within the furnace and from convection currents within the furnace.

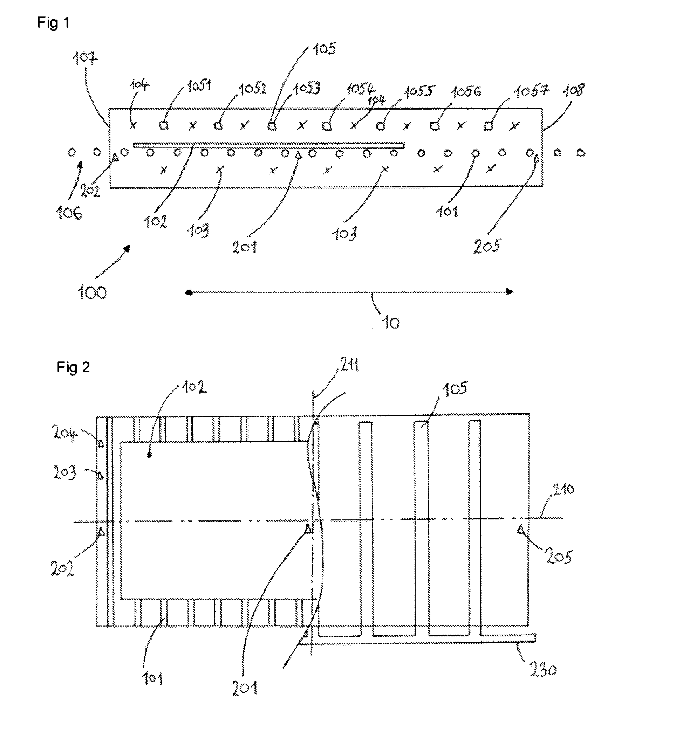

The heating cycle of the illustrated furnace 100 begins with a glass sheet 102 being fed into the furnace entry 107 from an entry conveyor 106. The glass sheet 102 is then carried backwards and forwards within the furnace 100 on furnace conveyer rollers 101 in an oscillating movement to limit deformation of the glass sheet during its heating cycle. At the end of the heating cycle, the heated glass sheet leaves the furnace exit 108 on an exit conveyor for transport, for example, to a quenching station. Oscillation of the glass sheet 102 within the furnace allows the maximum length of the heated area of the furnace to be used (full oscillation). Figs 1 and 2 illustrate the heating of a single glass sheet 102 whose length is about 75 % of the length of the furnace. In other configurations, the load (ie the glass sheet or sheets to be heated) may comprise a number of smaller glass sheets positioned adjacent to each other and loaded into the furnace as a single batch.

During at least part of the glass heating cycle, additional heat is supplied to the glass sheet by forced convection.

An addition source of heat transfer to the glass sheets is provided by seven ramps 105 (individually designated 1051, 1052, 1053, 1054, 1055, 1056 and 1057) which are each provided with nozzles arranged to direct forced convection blasting air towards an upper surface of the glass sheet 102. In the illustrated embodiment, each ramp extends across the furnace in a direction substantially perpendicular to the principal axis 10 of the furnace.

A convection control system configured to control the application of forced convection blasting air from the ramps 105 towards an upper surface of the glass sheet 102 comprises a series of valves controlling the application of pressurised air to each of the ramps 105 and a programmable logic controller (not shown).

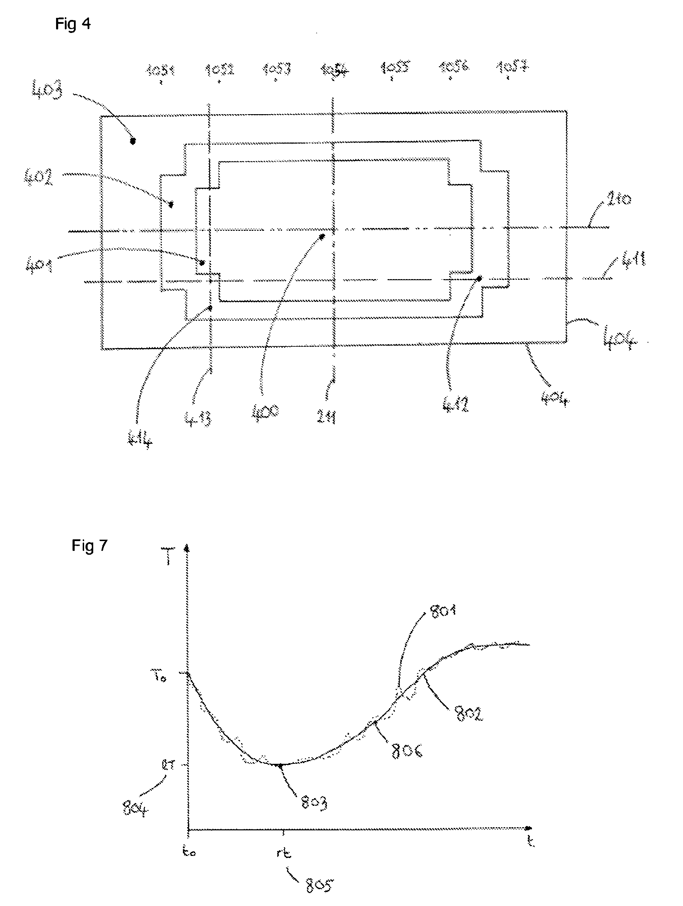

As illustrated in Fig 4, a horizontal plane within the furnace corresponding to the position of a glass sheet 102 being heated in the furnace 100 is divided into the following forced convection zones:
- a high convection zone 401 extending from a central portion 400 of the furnace towards the internal periphery 404 of the furnace in all directions;
- a medium convection zone 402 entirely surrounding the high convection zone and positioned between the high convection zone 401 and the internal periphery 405 of the furnace; and
- a low convection zone 403 entirely surrounding the medium convection zone 402 and positioned between the medium convection zone 402 and the internal periphery 405 of the furnace.

The convection zones 401, 402, 403 together form a series of substantially concentric zones; each zone is substantially elliptical in shape in a plane of the glass sheet 102; each zone is centred substantially about a transversal centre line 210 and about a longitudinal centre line 211 of the furnace. The pressure of forced convection blasting air in the central convection zone(s) is greater that than at the exterior zone(s). In the case of large furnaces, one or more convection zones may be divided into, for example, two or four sub-zones, for example into half or quarter ellipses.

Considering longitudinal axis 411 which is parallel to the principal axis 10 of the furnace, the high convection zone 401 is separated from the physical internal periphery of the furnace 404 at point 412 by the medium convection zone 402 (and indeed also by the low convection zone 403). Similarly, considering transverse axis 413 which is perpendicular to the principal axis of the furnace 10, the high convection zone 401 is separated from the physical internal periphery of the furnace 404 at point 414 by the medium convection zone 402 (and indeed also by the low convection zone 403). In the illustrated embodiment, the medium convection zone 402 surrounds the entire periphery of the high convection zone 401 and the low convection zone 403 surrounds the entire periphery of the medium convection zone 402.

Fig 4 also shows the positions of the forced convection ramps 1051 to 1057.

The amount of heat supplied and/or transferred by unit area is greater in the high 401 convection zone 104 than in the medium 402 and low 403 convection zones. Similarly, the amount of heat supplied and/or transferred by unit area is greater in the medium 402 convection zone than in the low 403 convection zone.

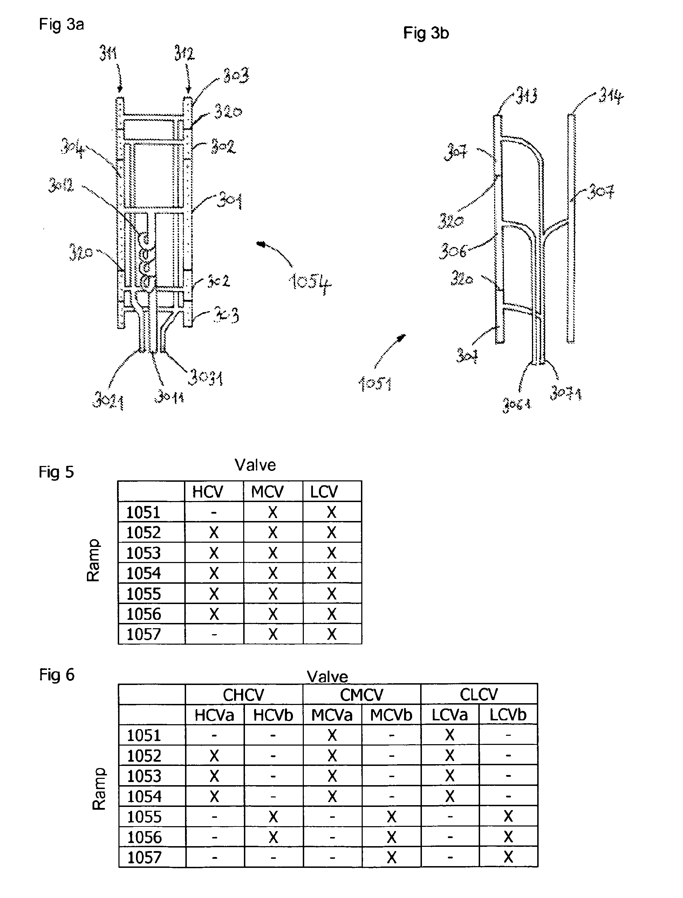

Fig 3a illustrates an embodiment of a forced convection ramp 1054 used at a central portion of the furnace. One or more of the ramps, and preferably all of the ramps, are preferably double ramps, that is to say a ramp having two substantially parallel lines of nozzles extending across the furnace, each line of nozzles, at least in its corresponding portions, being fed from a single inlet. This limits the number of inlet to the ramps that need to be provided and simplifies distribution of the forced convection blasting air and installation of the ramps in the furnace. Supply of forced convection blasting air to the ramps is preferably arranged via a distributor 230 arranged partially outside the furnace and penetrating through preferably sealed openings in a furnace wall.

Each branch 311, 312 of the double ramp 1054 comprises:
- a high convection portion 301 positioned towards the centre of the ramp and configured to be supplied with high convection blasting air via a high convection ramp inlet 3011;
- medium convection portions 302 positioned one on either side of the high convection portion 301 and configured to be supplied with medium convection blasting air via a medium convection ramp inlet 3021; and
- low convection portions 303 positioned at each extremity of the ramp 1054 configured to be supplied with low convection blasting air via a low convection ramp inlet 3031.

The high 301, medium 302 and low 303 convection portions of the ramp 1054 correspond respectively to the high 401, medium 402 and low 403 convection zones at the position in the furnace where the ramp is installed.

Each portion of the ramp 1054 is fitted with nozzles 304 configured to direct forced convection blasting air towards the upper surface of a glass sheet as it passes under the ramp 1054. The nozzles may have an outlet diameter in the range 0.45 mm to 2 mm, preferably in the range 0.7 mm and 1.2 mm. At least some of the nozzles may be slightly inclined relative to the vertical axis of the furnace and/or the transversal position of the nozzles on one ramp or branch may be offset with respect to the nozzles of an adjacent ramp or branch. This may facilitate an even distribution of the forced convection blasting air within a convection zone.

The ramps 1052, 1053, 1054, 1055 and 1056 which are adapted to direct forced convection blasting air at positions across the furnace which include the high 401, medium 402 and low 403 convection zones have similar configurations.

Fig 3b shows a ramp 1051 of which one branch 313 has only:
- a medium convection portion 306 positioned towards the centre of the ramp and configured to be supplied with medium convection blasting air via a medium convection ramp inlet 3061; and
- low convection portions 307 positioned one on either side of the medium convection portion 306 and configured to be supplied with low convection blasting air via a low convection ramp inlet 3071
whilst the other branch 314 has only a low convection portion 307 which extends along its entire length.

Each portion has nozzles (not shown).

Ramp 1051 and 1057 are of a similar configuration (one being a mirror image of the other) and are positioned across the furnace at the longitudinally external positions such that (i) the branch 313 having medium 306 and low 307 convection portions extends across a portion of the furnace to which the high convection zone 401 does not extend and (ii) the branch 314 having only a low convection portion 307 extends across a portion of the furnace at which neither the high 401 or medium 402 convection zones are present.

The ramps thus have a plurality of independent pressure zones along their length thanks to stops 320 between adjacent zones. Alternatively, individual ramps having different lengths may also be used.

The forced convection blasting air is preheated prior to being directed towards the glass surface, for example during its transfer to and/or through the ramps.

If needed, the lengths of the supply tubes for the ramps may be adjusted or selected to obtain a sufficient temperature of the injected air, for example with the help of coiled tubes positioned above the level of the glass. Fig 3a illustrates schematically a heat exchanger in the form of a coil 3012 included in the supply line providing high convection blasting air to the high convection portion of the ramp 301. The heat exchanger 3012 causes the blasting air to be heated (in this case from the ambient heat in the portion of the furnace at which the heat exchanger is positioned) before being expelled from the nozzles 304 toward the upper surface of a glass sheet. Preferably, the supply to each portion of the ramp is provided with a heat exchanger.

Fig 5 illustrates part of the configuration of a convection control system of one embodiment in which:
- the high convection ramp inlet 3011 of each ramp is supplied with high convection blasting air via a common high convection valve HCV
- the medium convection ramp inlet 3021 of each ramp is supplied with medium convection blasting air via a common medium convection valve MCV
- the low convection ramp inlet 3031 of each ramp is supplied with low convection blasting air via a common low convection valve LCV.

One operating cycle for a furnace of this type is as follows:

A bypass (not shown) to each of the convection valves HCV, MCV and LCV ensures that when the furnace is in a stand by mode or in operation a small pressure of air is applied to each ramp inlet 3011, 3021, 3031, 3061, 3071. This helps to provide a uniform background convection within the furnace and helps to prevent deterioration and/or corrosion of the nozzles, particularly at temperatures above about 350 °C or 400 °C.

When a trigger is detected indicating that a sheet of glass 102 to be heated is in the process of being introduced in to the furnace, the convection control system initiates a forced convection blasting cycle.

The glass sheet 102 to be heated is positioned symmetrically about the transverse centre line 210 of the furnace. If a trigger indicates that the glass sheet 102 to be heated extends transversely into the low 403 and medium convection zones 402 then forced convection blasting is implemented at the low 403, medium 402 and high 401 convection zones. In this case, each of the on/off solenoid valves HCV, MCV and LCV is opened once the glass sheet 102 has been introduced in to the furnace (and preferably during introduction of the glass sheet in to the furnace) so that forced convection blasting air is applied to the top surface of the glass sheet at the high, 401, medium 402 and low 403 convection zones during at least a portion of the heating cycle as the glass sheet 102 oscillates backwards and forwards within the furnace.

If a trigger indicates that the glass sheet 102 to be heated extends transversely into medium convection zone 402 (but not in to the low convection zone 403) then forced convection blasting is implemented at medium 402 and high 401 convection zones.

Similarly, if a trigger indicates that the glass sheet 102 to be heated does not extends transversely into either the low 403 or medium convection zones 402 then forced convection blasting is implemented only at the high 401 convection zones.

High convection solenoid valve HCV is supplied with high pressure blasting air, medium convection solenoid valve MCV is supplied with medium pressure blasting air and low convection solenoid valve LCV is supplied with lower pressure blasting air for example from a compressed air output block.

Preferably, the input pressure to each of the high convection, medium convection and low convection solenoid valves is variable, more preferably independently variable. Thus whilst the relative pressure supplied to the high convection 401, medium convection 402 and low convection 401 zones will be respectively high, medium and low, the ratios between these pressures may be varied, for example between one heating cycle and another or during a heating cycles. Preferably, the ratios between these pressures and/or their absolute values are selected from predetermined stored values on the basis of the type of load to be heated, for example on the basis of the thickness of the glass and/or the presence or absence of a low emissivity coating and/or the type of any glass coating and/or the number and configuration of individual glass sheets forming a load to be heated simultaneously in the furnace. Similarly, the total amount of heat supplied to the glass by the forced convection may be varied during a heating cycle. For example, a higher total level of forced convection may be used during an early part of a heating cycle and a lower total amount of forced convection during a later part of the heating cycle.

At the end of the heating cycle, the glass sheet is conveyed out of the furnace, for example to a bending and/or quenching station. The forced convection cycle may be stopped at or slightly before (for example 5 to 20 seconds before) the end of the heating cycle, for example by turning off the solenoid valves HCV, MCV, LCV.

Fig 6 illustrates part of an alternative configuration of a convection control system using six on/off solenoid valves in which:
- the high convection ramp inlets of the upstream ramps 1051,1052,1053,1054 are supplied with high convection blasting air via an upstream high convection valve HCVa, the high convection ramp inlets of the downstream ramps 1055, 1056, 1057 are supplied with high convection blasting air via a downstream high convection valve HCVb with the upstream HCVa and downstream HCVb high convection valves each being supplied with pressurised air from a common high convection valve CHCV (preferably a variable pressure valve)
- the medium convection ramp inlets of the upstream ramps 1051,1052,1053,1054 are supplied with medium convection blasting air via an upstream medium convection valve MCVa, the medium convection ramp inlets of the downstream ramps 1055, 1056, 1057 are supplied with medium convection blasting air via a downstream medium convection valve MCVb with the upstream MCVa and downstream MCVb medium convection valves each being supplied with pressurised air from a common medium convection valve CMCVC (preferably a variable pressure valve).
- a common low convection valve CLCV (preferably a variable pressure valve) supplies low convection blasting air (i) to the low convection ramp inlets of the upstream ramps 1051, 1052, 1053, 1054 via an upstream low convection valve LCVa, and (ii) to the low convection ramp inlets of the downstream ramps 1055, 1056, 1057 via a downstream low convection valve LCVb.

This configuration allows the block of upstream ramps 1051,1052,1053,1054 and the block of downstream ramps 1055, 1056, 1057 to be used either in combination or independently. Preferably, where the blocks of upstream and downstream ramps are used independently, this is used to completely disable one or other block during the entire heating cycle or during an entire portion of a heating cycle. For example, both blocks may be operated during the first three quarter of a heating cycle and only the upstream block may be operated during the last quarter of the heating cycle. Once a block has been disabled during a heating cycle, it is preferably not re-enabled during the same heating cycle.

In an alternative, non-illustrated embodiment similar to that represented in Fig 6, each of the branches 314 of the exterior ramps 1051, 1057 which has only a single low pressure zone 307 is supplied directly via the common low convection valve CLCV. In this configuration, low pressure forced convection blasting air is always supplied to these branches, for example throughout the entire heating cycle, when the low convection zone 403 is activated.

The illustrated furnace is also provided with a temperature rebound monitor 201. This comprises a thermocouple positioned , for example, in a horizontal plane towards the centre of the furnace (as shown in Fig 2) for example within a radius of about 50 cm or 100 cm from the centre of the furnace, positioned vertically between the lower radiation heating elements 103 and the rollers 101 (as shown in Fig 1) and positioned longitudinally between rollers 101 and lower radiation heating elements 103 (as shown in Fig 1); it is preferably positioned equidistantly between adjacent rollers 101 about 100 mm below the upper surface of the rollers ( ie about 100 mm below the position of a glass load 102 in the furnace). The temperature rebound monitor 201 is preferably positioned below the position of a glass load within the furnace; this may avoid excessive disturbance in the signal from the temperature rebound monitor 201 caused by the presence or absence of a coating layer at the upper surface of the glass sheet, for example a low emissivity or solar control coating. The distance of the temperature rebound monitor 201 from an adjacent surface of a glass sheet passing over the temperature rebound monitor is preferably at least 30 mm, more preferably at least 50 mm or 80mm; the distance is preferably not more than 150 mm, more preferably not more than 100 mm.

Whilst reference is made to a rebound temperature it will be appreciated that this is not necessarily a temperature expressed of a temperature scale, for example in Celsius or Fahrenheit, but may be an indication corresponding to a temperature, for example expressed in volts, hertz or ohms. This applies equally to other temperatures referred to herein.

The temperature T indicated by the temperature rebound monitor 201 as a function of time t in one form of heating cycle is illustrated by line 801 in Fig 7. In this embodiment, an algorithm is applied to the temperature T indicated by the temperature rebound monitor 201 to produce a corrected rebound monitor temperature indication illustrated by the line 802. This algorithm is configured to smooth out the fluctuations and facilitate determination of a rebound temperature RT 804 and rebound temperature time rt 805 corresponding to a rebound point 803 which represents a turning point in the heating cycle at which, before the turning point is reached, the trend in the temperature T indicated by the temperature rebound monitor 201 is generally decreasing and, once the turning point has been passed, the trend in the temperature T indicated by the temperature rebound monitor 201 is generally increasing. The temperature T₀ is the temperature indicated by the temperature rebound monitor at time to ie at the start of a heating cycle. It will be appreciated that the turning point represents an approximate indication that a particular point in the heating cycle has been reached rather that an exact measurement.

In one embodiment of the invention, the amount of heat supplied to the glass sheet 102 by the forced convection before the rebound temperature 804 is reached is controlled by the convection control system according to a predetermined stored recipe on the basis of the type of load to be heated. Then, once the rebound temperature has been reached, the amount of heat supplied to the glass sheet 102 by the forced convection is controlled at least in part by the convection control system based on a function including a comparison between (i) the difference between the rebound temperature 804 and the temperature To and (ii) the difference between the real time temperature indicated by the temperature rebound monitor and the rebound temperature 804. The amount of heat supplied to the glass sheet 102 by the forced convection may thus be reduced in a way determined by the forced convection control system as the glass progressively approaches its desired temperature towards a later part and/or towards the end of the heating cycle. The convection control system may be configured such that the lower the temperature indicated by the temperature rebound monitor 201, the higher the pressure of forced convection blasting air.

The illustrated furnace also has
- a high convection trigger 202;
- a medium convection trigger 203; and
- a low convection trigger 204;
   adapted to output a signal upon detection of proximity of a glass sheet or part of a load to be heated at a transversal position across the width of the furnace corresponding respectively to the high 401, medium 402 and low 403 convection zones. Such trigger signals may be used to initiate a forced convection cycle and/or indicate which convection zone(s) 401, 402,403 should be activated during the cycle and/or act as a check for an alternative trigger signal. Such triggers may be used to verify a trigger signal provided from an alternative source; for example, if an alternative trigger signal indicates that a new sheet of glass 102 is in the process of being loaded into the furnace but within a predetermined time, for example 15-20 seconds, the proximity of such a glass sheet is not detected by one of the convection triggers, an alarm may be provided for a furnace operator and/or the heating cycle may be interrupted. In this embodiment, each convection trigger 202, 203, 204 comprises a thermocouple positioned towards the entry of the furnace, preferably inside the furnace, and preferably below the plane of a glass sheet 102. Proximity to the thermocouple of a sheet of glass 102 which is at a temperature lower than the temperature of the furnace detected by the thermocouple, for example entry of a room temperature sheet of glass in to the furnace or approach of a sheet of glass that has not yet reached the furnace temperature, will cause the thermocouple to provide a signal indicating a fall in temperature detected. This may be used as a proximity sensor.

In a similar fashion, the furnace 100 is also provided with an end point trigger 205, positioned within the furnace towards its downstream end and adapted to output a signal upon detection of proximity of glass at the downstream end of the furnace. Again, a thermocouple may be used.

The position of these triggers with respect to the plane of the glass load may be as described with respect to the rebound temperature monitor.

Monitoring of the signals from the convection trigger(s) and or the end point trigger may be used to determine, for example:
- the length of the load, for example knowing the speed at which the load is fed into the furnace and assessing the time between (i) a leading edge of the load being in the proximity of a convection trigger 202,203,204 and (ii) the leading edge being in the proximity of the end point trigger 205

Any feature or characteristic described herein may be used individually or in combination with any other feature of characteristic.

## Claims

1. A glass sheet furnace (100) for heating a glass sheet load (102) for tempering and/or bending in which the furnace comprises:
- a substantially horizontal conveyer adapted to convey the glass sheet load through the furnace;
- upper radiation heating elements (104) and lower radiation heating elements (103) positioned respectively in the furnace to heat an upper and a lower surface of the glass sheet load by radiation;
- a plurality of ramps (105) and nozzles positioned within the furnace and configured to direct forced convection blasting air towards the upper surface of the glass sheet load according to a blasting pattern; and
- a convection control system adapted to control the application of the forced convection blasting air;
**characterised in that** the convection control system and the plurality of ramps and nozzles are configured to define a blasting pattern comprising:
- a high convection zone (401) extending from a central portion of the furnace in all directions towards an internal periphery of the furnace selected from (i) the physical internal periphery (404) of the furnace and (ii) the periphery of a zone of the furnace at which the load is allowed to oscillate during a heating cycle; and
- a low convection zone (403) which separates the high convection zone from the selected internal periphery at along at least one longitudinal axis parallel to the principal axis of the furnace and along at least one transverse axis perpendicular to the principal axis of the furnace.

2. A glass sheet furnace (100) in accordance with claim 1, in which the low convection zone (403) entirely surrounding the high convection zone (401) and is positioned between the high convection zone and the selected internal periphery of the furnace.

3. A glass sheet furnace (100) in accordance with claim 1 or claim 2, in which the convection control system is configured to activate the application of forced convection blasting air at the low convection zone (403) in response to an indication, preferably from a temperature sensor (204) positioned within the furnace, that the load to be heated within the furnace will extend into the low convection zone.

4. A glass sheet furnace (100) in accordance with any preceding claim, in which the convection control system and the plurality of ramps (105) and nozzles are configured to define a blasting pattern comprising:
- the high convection zone (401) extending from a central portion of the furnace towards the selected internal periphery of the furnace in all directions;
- a medium convection zone (402) entirely surrounding the high convection zone and positioned between the high heat convection zone and the selected internal periphery of the furnace; and
- a low convection zone (403) entirely surrounding the medium convection zone and positioned between the medium convection zone and the selected internal periphery of the furnace.

5. A glass sheet furnace (100) in accordance with any preceding claim, in which the furnace is an oscillating architectural glass tempering furnace, preferably a furnace in which the ratio of the length to width of each convection zone is in the range of 0.8 to 1.2 of the ratio of the length to the width of the selected internal periphery of the furnace.

6. A glass sheet furnace (100) in accordance with claim 5, in which each convection zone is substantially elliptical in shape.

7. A glass sheet furnace (100) in accordance with any preceding claim, in which the ramps (105) extend across the width of the furnace, substantially perpendicular to the principle axis (210) of the furnace.

8. A glass sheet furnace (100) in accordance with any preceding claim, in which at least one ramp (1054) positioned towards the centre of the furnace comprises (i) a high convection conduit (301) connected to a source of high convection blasting air, the high convection conduit having nozzles configured to direct high convection blasting air towards the upper surface of a glass sheet load within the high convection zone and (ii) a low convection conduit (303) connected to a source of low convection blasting air, the low convection conduit having nozzles configured to direct low convection blasting air towards the upper surface of a glass sheet load within the low convection zone.

9. A glass sheet furnace (100) in accordance with claim 8, in which the convection control system comprises a variable pressure valve configured to adjust the ratio between the pressure supply of the high convection blasting air and the pressure supply of the low convection blasting air.

10. A glass sheet furnace (100) for heating a glass sheet load (102) in a glass sheet furnace for tempering and/or bending preferably in accordance with any preceding claim, in which the furnace comprises:
- a substantially horizontal conveyer adapted to convey the glass sheet load through the furnace;
- upper radiation heating elements (104) and lower radiation heating elements (103) positioned respectively in the furnace to heat an upper and a lower surface of the glass sheet load by radiation;
- a plurality of ramps (105) and nozzles positioned within the furnace and configured to direct forced convection blasting air towards the upper surface of the glass sheet load according to a blasting pattern;
- a convection control system adapted to control the application of the forced convection blasting air; and
- a temperature rebound monitor (201) configured to monitor an indication of the temperature of the furnace at a temperature rebound monitoring position within the furnace, the vertical position of the temperature rebound monitoring position being between a plane of radiation heaters (103) and a plane along which the glass sheet load is conveyed within the furnace;
and in which the convection control system is configured to:
- determine, from a signal from the temperature rebound monitor, the point in the glass sheet heating cycle at which the rebound temperature has been reached; and
- reduce the heat supplied to the glass sheet by the application of the forced convection blasting air once the rebound temperature has been reached.

11. A glass sheet furnace (100) in accordance with claim 10, in which the convection control system is configured to:
- monitor the indication of the temperature from the temperature rebound monitor (201) after the rebound temperature has been reached; and
- during a portion of the glass sheet heating cycle after the rebound temperature has been reached, control the amount of heat supplied to the glass sheet load by the forced convection blasting air based on a function including a comparison between (i) the difference between the rebound temperature and a temperature to detected towards the beginning of the heating cycle and (ii) the difference between the real time temperature indicated by the temperature rebound monitor and the rebound temperature.

12. A glass sheet furnace (100) in accordance with claim 10 or claim 11, in which the convection control system is configured to control the amount of heat supplied to the glass sheet by the forced convection blasting air during a portion of the heating cycle before the rebound temperature has been reached is based on an indication of the type of load to be heated.

13. A method of heating a glass sheet load (102) in an oscillating architectural glass sheet furnace (100) particularly for subsequent tempering and/or bending comprising:
- conveying the glass sheet load through the furnace along a substantially horizontal conveyer;
- subjecting the glass sheet load in the furnace to radiation from upper radiation heating elements (104) and lower radiation heating elements (103) positioned respectively to heat an upper and a lower surface of the glass sheet load by radiation;
**characterised in**
- directing forced convection blasting air towards the upper surface of the glass sheet load at a high convection zone (401) extending from a central portion of the furnace in all directions towards an internal periphery of the furnace selected from (i) the physical internal periphery of the furnace (404) and (ii) the periphery of a zone of the furnace at which the load is allowed to oscillate during a heating cycle;
- monitoring an indication as to whether the glass sheet load will extend within a low convection zone entirely surrounding the high convection zone and positioned between the high heat convection zone and the selected internal periphery of the furnace; and
- if said indication indicates that the glass sheet load will extend within the low convection zone, directing forced convection blasting air towards the upper surface of the glass sheet load at the low convection zone.

14. A method of heating a glass sheet load in an oscillating architectural glass sheet furnace (100) particularly for subsequent tempering and/or bending and preferably in accordance with claim 13 comprising the steps of:
- conveying the glass sheet load through the furnace along a substantially horizontal conveyer;
- subjecting the glass sheet load in the furnace to radiation from upper radiation heating elements (104) and lower radiation heating elements (103) positioned respectively to heat an upper and a lower surface of the glass sheet load by radiation;
- directing forced convection blasting air towards the upper surface of the glass sheet load according to a blasting pattern;
- monitoring an indication of the temperature of the furnace at a heating cycle monitoring position within the furnace, the vertical position of the heating cycle monitoring position being between a plane of radiation heaters (103) and a plane along which the glass sheet load is conveyed within the furnace;
- determining from the indication of the temperature of the furnace at the heating cycle monitoring position the point in the glass sheet heating cycle at which the temperature of the furnace at the heating cycle monitoring position has reached the rebound temperature; and
- reducing the heat supplied to the glass sheet load by the forced air convection once the rebound temperature in the heating cycle has been passed.

15. A method in accordance with claim 14, including the steps of:
- monitoring an indication of the temperature of the furnace (100) at a heating cycle monitoring position once the rebound temperature in the cycle has been passed; and
- controlling the amount of heat supplied to the glass sheet load by the forced air convection at a point in the heating cycle after the rebound temperature in the heating cycle has been passed based on a function including a comparison between (i) the difference between the rebound temperature and a temperature to detected towards the beginning of the heating cycle and (ii) the difference between the real time temperature indicated by the temperature rebound monitor and the rebound temperature.

## Patentansprüche

1. Glasscheibenofen (100) zum Heizen einer Glasscheibencharge (102) zum Tempern und/oder Biegen, wobei der Ofen umfasst:
- einen im Wesentlichen horizontalen Förderer, der geeignet ist, die Glasscheibencharge durch den Ofen zu befördern;
- obere Strahlungsheizelemente (104) und untere Strahlungsheizelemente (103), die jeweils in dem Ofen positioniert sind, um eine obere und untere Oberfläche der Glasscheibencharge durch Strahlung zu heizen;
- eine Vielzahl von Ausläufen (105) und Düsen, die in dem Ofen positioniert sind und aufgebaut sind, um gemäß einem Strahlmuster Zwangskonvektionsstrahlluft in Richtung der oberen Oberfläche der Glasscheibencharge zu richten; und
- ein Konvektionssteuersystem, das geeignet ist, die Anwendung der Zwangskonvektionsstrahlluft zu steuern;
**dadurch gekennzeichnet, dass** das Konvektionssteuersystem und die Vielzahl von Ausläufen und Düsen derart aufgebaut sind, dass sie ein Strahlmuster definieren, das umfasst:
- eine Hochkonvektionszone (401), die sich von einem mittleren Abschnitt des Ofens in alle Richtungen in Richtung eines Innenumfangs des Ofens erstreckt, der ausgewählt wird aus (i) dem physischen Innenumfang (404) des Ofens und (ii) dem Umfang einer Zone des Ofens, an dem zugelassen wird, dass die Charge während eines Heizzyklus oszilliert; und
- eine Niederkonvektionszone (403), welche die Hochkonvektionszone wenigstens entlang einer Längsachse parallel zu der Hauptachse des Ofens und wenigstens entlang einer Querachse senkrecht zu der Hauptachse des Ofens von dem ausgewählten Innenumfang trennt.

2. Glasscheibenofen (100) nach Anspruch 1, in dem die Niederkonvektionszone (403) die Hochkonvektionszone (401) vollständig umgibt und zwischen der Hochkonvektionszone und dem ausgewählten Innenumfang des Ofens positioniert ist.

3. Glasscheibenofen (100) nach Anspruch 1 oder Anspruch 2, in dem das Konvektionssteuersystem aufgebaut ist, um ansprechend auf eine Anzeige, vorzugsweise von einem in dem Ofen positionierten Temperatursensor (204), dass die Charge, die in dem Ofen geheizt werden soll, sich in die Niederkonvektionszone erstrecken wird, die Anwendung von Zwangskonvektionsstrahlluft in der Niederkonvektionszone (403) zu aktivieren.

4. Glasscheibenofen (100) nach jedem vorhergehenden Anspruch, in dem das Konvektionssteuersystem und die Vielzahl von Ausläufen (105) und Düsen aufgebaut sind, um ein Strahlmuster zu definieren, das umfasst:
- eine Hochkonvektionszone (401), die sich von einem mittleren Abschnitt des Ofens in alle Richtungen in Richtung des ausgewählten Innenumfangs des Ofens erstreckt;
- eine mittlere Konvektionszone (402), welche die Hochkonvektionszone vollständig umgibt und zwischen der Hochkonvektionszone und dem ausgewählten Innenumfang des Ofens positioniert ist; und
- eine Niederkonvektionszone (403), welche die mittlere Konvektionszone vollständig umgibt und zwischen der mittleren Konvektionszone und dem ausgewählten Innenumfang des Ofens positioniert ist.

5. Glasscheibenofen (100) nach jedem vorhergehenden Anspruch, wobei der Ofen ein oszillierender architektonischer Glastemperofen, vorzugsweise ein Ofen ist, in dem das Verhältnis der Länge zur Breite jeder Konvektionszone in dem Bereich von 0,8 bis 1,2 des Verhältnisses der Länge zu der Breite des ausgewählten Innenumfangs des Ofens ist.

6. Glasscheibenofen (100) nach Anspruch 5, wobei jede Konfektionszone im Wesentlichen eine elliptische Form hat.

7. Glasscheibenofen (100) nach jedem vorhergehenden Anspruch, wobei die Ausläufe (105) sich quer zu der Breite des Ofens im Wesentlichen senkrecht zu der Hauptachse (210) des Ofens erstrecken.

8. Glasscheibenofen (100) nach jedem vorhergehenden Anspruch, wobei wenigstens ein Auslauf (1054), der in der Richtung der Mitte des Ofens positioniert ist, umfasst: (i) einen Hochkonvektionskanal (301), der mit einer Quelle von Hochkonvektionsstrahlluft verbunden ist, wobei der Hochkonvektionskanal Düsen hat, die aufgebaut sind, um Hochkonvektionsstrahlluft in Richtung der oberen Oberfläche einer Glasscheibencharge innerhalb der Hochkonvektionszone zu richten, und (ii) einen Niederkonvektionskanal (303), der mit einer Quelle von Niederkonvektionsstrahlluft verbunden ist, wobei der Niederkonvektionskanal Düsen hat, die aufgebaut sind, um Niederkonvektionsstrahlluft in Richtung der oberen Oberfläche einer Glasscheibencharge innerhalb der Niederkonvektionszone zu richten.

9. Glasscheibenofen (100) nach Anspruch 8, wobei das Konvektionssteuersystem ein variables Druckventil umfasst, das aufgebaut ist, um das Verhältnis zwischen der Druckzuführung der Hochkonvektionsstrahlluft und der Druckzuführung der Niederdruckkonvektionsstrahlluft einzustellen.

10. Glasscheibenofen (100) zum Heizen einer Glasscheibencharge (102) in einem Glasscheibenofen zum Tempern und/oder Biegen vorzugsweise nach jedem vorhergehenden Anspruch, wobei der Ofen umfasst:
- einen im Wesentlichen horizontalen Förderer, der geeignet ist, die Glasscheibencharge durch den Ofen zu befördern;
- obere Strahlungsheizelemente (104) und untere Strahlungsheizelemente (103), die jeweils in dem Ofen positioniert sind, um eine obere und untere Oberfläche der Glasscheibencharge durch Strahlung zu heizen;
- eine Vielzahl von Ausläufen (105) und Düsen, die in dem Ofen positioniert sind und aufgebaut sind, um gemäß einem Strahlmuster Zwangskonvektionsstrahlluft in Richtung der oberen Oberfläche der Glasscheibencharge zu richten;
- ein Konvektionssteuersystem, das geeignet ist, die Anwendung der Zwangskonvektionsstrahlluft zu steuern; und
- eine Temperaturumkehrüberwachungseinrichtung (201) (engl.: temperature rebound monitor), die aufgebaut ist, um eine Anzeige der Temperatur des Ofens an einer Temperaturumkehrüberwachungsposition in dem Ofen zu überwachen, wobei die vertikale Position der Temperaturumkehrüberwachungsposition zwischen einer Ebene von Strahlungsheizungen (103) und einer Ebene, entlang welcher die Glasscheibencharge in dem Ofen befördert wird, liegt; und wobei das Konvektionssteuersystem aufgebaut ist, um:
- aus einem Signal von der Temperaturumkehrüberwachungseinrichtung den Punkt in dem Glasscheibenheizzyklus zu bestimmen, an dem die Umkehrtemperatur (engl.: rebound temperature) erreicht wurde; und
- die durch die Anwendung der Zwangskonvektionsstrahlluft an die Glasscheibe zugeführte Wärme zu verringern, wenn die Umkehrtemperatur einmal erreicht wurde.

11. Glasscheibenofen (100) nach Anspruch 10, wobei das Konvektionssteuersystem aufgebaut ist, um:
- die Anzeige der Temperatur von der Temperaturumkehrüberwachungseinrichtung (201) zu überwachen, nachdem die Umkehrtemperatur erreicht wurde; und
- während eines Abschnitts des Glasscheibenheizzyklus, nachdem die Umkehrtemperatur erreicht wurde, die Wärmemenge, die durch die Zwangskonvektionsstrahlluft an die Glasscheibencharge zugeführt wird, basierend auf einer Funktion zu steuern, die umfasst: (i) die Differenz zwischen der Umkehrtemperatur und einer Temperatur t₀, die gegen Anfang des Heizzyklus erfasst wurde, und (ii) die Differenz zwischen der von der Temperaturumkehrüberwachungseinrichtung angezeigten Echtzeittemperatur und der Umkehrtemperatur.

12. Glasscheibenofen (100) nach Anspruch 10 oder Anspruch 11, in dem das Konvektionssteuersystem aufgebaut ist, um die Wärmemenge, die durch die Zwangskonvektionsstrahlluft während eines Abschnitts des Heizkreislaufs an die Glasscheibe zugeführt wird, bevor die Umkehrtemperatur erreicht wurde, basierend auf einer Anzeige der Art der Charge, die geheizt werden soll, zu steuern.

13. Verfahren zum Heizen einer Glasscheibencharge (102) in einem oszillierenden architektonischen Glasscheibenofen (100) insbesondere für das anschließende Tempern und/oder Biegen, das umfasst:
- Befördern der Glasscheibencharge durch den Ofen entlang eines im Wesentlichen horizontalen Förderers;
- Aussetzen der Glasscheibencharge in dem Ofen einer Strahlung von oberen Strahlungsheizelementen (104) und unteren Strahlungsheizelementen (104), die jeweils positioniert sind, um eine obere und eine untere Oberfläche der Glasscheibe durch Strahlung zu heizen;
**gekennzeichnet durch**
- Richten von Zwangskonvektionsstrahlluft in Richtung der oberen Oberfläche der Glasscheibencharge in einer Hochkonvektionszone (401), die sich von einem mittleren Abschnitt des Ofens in alle Richtungen in Richtung eines Innenumfangs des Ofens erstreckt, der ausgewählt wird aus (i) dem physischen Innenumfang (404) des Ofens und (ii) dem Umfang einer Zone des Ofens, an dem zugelassen wird, dass die Charge während eines Heizzyklus oszilliert; und
- Überwachen einer Anzeige, ob die Glasscheibencharge sich innerhalb einer Niederkonvektionszone (403) erstrecken wird, welche die Hochkonvektionszone vollständig umgibt und zwischen der Hochwärmekonvektionszone und dem ausgewählten Innenumfang des Ofens positioniert ist; und
- wenn die Anzeige anzeigt, dass die Glasscheibencharge sich innerhalb der Niederkonvektionszone erstrecken wird, Richten der Zwangskonvektionsstrahlluft in Richtung der oberen Oberfläche der Glasscheibencharge in der Niederkonvektionszone.

14. Verfahren zum Heizen einer Glasscheibencharge in einem oszillierenden architektonischen Glasscheibenofen (100) insbesondere für das anschließende Tempern und/oder Biegen und vorzugsweise nach Anspruch 13, das die folgenden Schritte umfasst:
- Befördern der Glasscheibencharge durch den Ofen entlang eines im Wesentlichen horizontalen Förderers;
- Aussetzen der Glasscheibencharge in dem Ofen einer Strahlung von oberen Strahlungsheizelementen (104) und unteren Strahlungsheizelementen (103), die jeweils positioniert sind, um eine obere und eine untere Oberfläche der Glasscheibe durch Strahlung zu heizen;
- Richten von Zwangskonvektionsstrahlluft in Richtung der oberen Oberfläche der Glasscheibencharge gemäß einem Strahlmuster;
- Überwachen einer Anzeige der Temperatur des Ofens an einer Heizzyklusüberwachungsposition innerhalb des Ofens, wobei die Heizzyklusüberwachungsposition zwischen einer Ebene der Strahlungsheizungen (103) und einer Ebene, entlang welcher die Glasscheibencharge innerhalb des Ofens befördert wird, liegt,
- Bestimmen des Punkts in dem Glasscheibenheizzyklus, an dem die Temperatur des Ofens an der Heizzyklusüberwachungsposition die Umkehrtemperatur erreicht hat, aus der Anzeige der Temperatur des Ofens an der Heizzyklusüberwachungsposition; und
- Verringern der durch die Zwangskonvektionsstrahlluft an die Glasscheibencharge zugeführten Wärme, wenn die Umkehrtemperatur in dem Heizkreislauf durchlaufen wurde.

15. Verfahren gemäß Anspruch 14, das die folgenden Schritte umfasst:
Überwachen einer Anzeige der Temperatur in dem Ofen (100) an einer Heizzyklusüberwachungsposition, wenn die Umkehrtemperatur in dem Zyklus einmal durchlaufen wurde; und
- Steuern der Menge der durch die Zwangsluftkonvektion an die Glasscheibencharge zugeführten Wärme an einem Punkt in dem Heizkreislauf, nachdem die Umkehrtemperatur in dem Heizkreislauf durchlaufen wurde, basierend auf einer Funktion, die umfasst: einen Vergleich zwischen (i) der Differenz zwischen der Umkehrtemperatur und einer Temperatur t₀, die gegen Anfang des Heizzyklus erfasst wurde, und (ii) der Differenz zwischen der von der Temperaturumkehrüberwachungseinrichtung angezeigten Echtzeittemperatur und der Umkehrtemperatur.

## Revendications

1. Un four pour feuilles de verre (100) servant à chauffer une charge de feuilles de verre (102) en vue d'une trempe et/ou d'un bombage, dans lequel le four comprend :
- un transporteur substantiellement horizontal adapter à transporter la charge de feuilles de verre à travers le four ;
- des éléments chauffants à rayonnement supérieurs (104) et des éléments chauffants à rayonnement inférieurs (103) positionnés respectivement dans le four pour chauffer une surface supérieure et une surface inférieure du chargement de feuilles de verre par rayonnement ;
- une pluralité de rampes (105) et de buses positionnées à l'intérieur du four et configurées pour diriger de l'air soufflé à convection forcée vers la surface supérieure du chargement de feuilles de verre selon un modèle de soufflage ; et
- un système de commande de convection adapté pour commander l'application de l'air soufflé à convection forcée ;
**caractérisé en ce que** le système de commande de convection et la pluralité des rampes et buses soient configurés de manière à définir un modèle de soufflage comprenant :
- une zone à haute convection (401) s'étendant depuis une portion centrale du four dans toutes les directions vers une périphérie interne du four sélectionnée à partir de (i) la périphérie interne physique (404) du four et (ii) la périphérie d'une zone du four dans laquelle la charge est autorisée à osciller durant un cycle de chauffe ; et
- une zone de basse convection (403) qui sépare la zone de haute convection de la périphérie interne sélectionnée le long au moins d'un axe longitudinal parallèle à l'axe principal du four et le long au moins d'un axe transversal perpendiculaire à l'axe principal du four.

2. Un four à feuilles de verre (100) selon la revendication 1, dans lequel la zone de basse convection (403) entoure entièrement la zone de haute convection (401) et est positionnée entre la zone de haute convection et la périphérie interne sélectionnée du four.

3. Un four pour feuilles de verre (100) selon la revendication 1 ou la revendication 2, dans lequel le système de commande de convection est configuré de manière à activer l'application d'air soufflé à convection forcée dans la zone de basse convection (403) en réponse à une indication, provenant de préférence d'un capteur de température (204) positionné à l'intérieur du four, comme quoi la charge à chauffer à l'intérieur du four s'étendra dans la zone de basse convection.

4. Un four pour feuilles de verre (100) selon l'une quelconque des revendications précédentes, dans lequel le système de commande de convection et la pluralité de rampes (105) et les buses sont configurée pour définir un modèle de soufflage comprenant :
- la zone de haute convection (401) s'étendant depuis une portion centrale du four vers la périphérie interne sélectionnée du four dans toutes les directions ;
- une zone de convection moyenne (402) entourant entièrement la zone de haute convection et positionnée entre la zone de convection à haute chaleur et la périphérie interne sélectionnée du four ; et
- une zone de basse convection (403) entourant entièrement la zone de convection moyenne et positionnée entre la zone de convection moyenne et la périphérie interne sélectionnée du four.

5. Un four pour feuilles de verre (100) selon l'une quelconque des revendications précédentes, dans lequel le four est un four de trempe de verre architectural oscillant, de préférence un four dans lequel le rapport entre la longueur et la largeur de chaque zone de convection est dans la gamme de 0,8 à 1,2 du rapport entre la longueur et la largeur de la périphérie interne sélectionnée du four.

6. Un four pour feuilles de verre (100) selon la revendication 5, dans lequel chaque zone de convection est de forme substantiellement elliptique.

7. Un four pour feuilles de verre (100) selon l'une quelconque des revendications précédentes, dans lequel les rampes (105) s'étendent à travers la largeur du four, de manière substantiellement perpendiculaire à l'axe principal (210) du four.

8. Un four pour feuilles de verre (100) selon l'une quelconque des revendications précédentes, dans lequel au moins une rampe (1054) positionnée vers le centre du four comprend (i) un conduit de haute convection (301) connecté à une source d'air soufflé à haute convection, le conduit de haute convection ayant des buses configurées pour diriger l'air soufflé à haute convection vers la surface supérieure d'une charge de feuilles de verre à l'intérieur de la zone de haute convection et (ii) un conduit de basse convection (303) connecté à une source d'air soufflé à basse convection, le conduit de basse convection ayant des buses configurées pour diriger de l'air soufflé de basse convection vers la surface supérieure d'une charge de feuilles de verre à l'intérieur de la zone de basse convection.

9. Un four pour feuilles de verre (100) selon la revendication 8, dans lequel le système de commande de convection comprend une vanne à pression variable configurée pour ajuster le rapport entre la pression d'alimentation de l'air soufflé à haute convection et la pression d'alimentation de l'air soufflé à basse convection.

10. Un four pour feuilles de verre (100) pour chauffer une charge de feuilles de verre (102) dans un four à feuilles de verre de tempe et/ou de bombage de préférence selon l'une quelconque des revendications précédentes, dans lequel le four comprend :
- un transporteur substantiellement horizontal adapté pour transporter la charge de feuilles de verre à travers le four ;
- des éléments chauffants à rayonnement supérieurs (104) et des éléments chauffants à rayonnement inférieurs (103) positionnés respectivement dans le four pour chauffer une surface supérieure et une surface inférieure du chargement de feuilles de verre par rayonnement ;
- une pluralité de rampes (105) et de buses positionnées à l'intérieur du four et configurées pour diriger de l'air soufflé à convection forcée vers la surface supérieure du chargement de feuilles de verre selon un modèle de soufflage ;
- un système de commande de convection adapté pour commander l'application de l'air soufflé à convection forcée ; et
- un dispositif de surveillance de rebond de température (201) configuré pour surveiller une indication de la température du four en une position de surveillance du rebond de température à l'intérieur du four, la position verticale de la position de surveillance du rebond de température se trouvant entre un plan d'éléments chauffants par rayonnement (103) et un plan le long duquel la charge de feuilles de verre est transporté à l'intérieur du four ;
et dans lequel le système de commande de convection est configuré pour :
- déterminer, à partir d'un signal du dispositif de surveillance du rebond de température, le point dans le cycle de chauffe de la feuille de verre auquel la température de rebond a été atteinte ; et
- réduire la chaleur fournir à la feuille de verre par l'application de l'air soufflé à convection forcée une fois que la température de rebond a été atteinte.

11. Un four pour feuilles de verre (100) selon la revendication 10, dans lequel le système de commande de convection est configuré pour :
- surveiller l'indication de la température donnée par le dispositif de surveillance du rebond de température (201) après que la température de rebond a été atteinte ; et
- durant une portion du cycle de chauffe de la feuille de verre après que la température de rebond a été atteinte, réguler la quantité de chaleur fournie au chargement de feuilles de verre par l'air soufflé à convection forcée sur la base d'une fonction comprenant une comparaison entre (i) la différence entre la température de rebond et une température t₀ détectée vers le début du cycle de chauffe et (ii) la différence entre la température en temps réel indiquée par le dispositif de surveillance du rebond de température et la température de rebond.

12. Un four pour feuilles de verre (100) selon la revendication 10 ou la revendication 11, dans lequel le système de commande de convection est configuré pour réguler la quantité de chaleur fournie à la feuille de verre par l'air soufflé à convection forcée durant une portion du cycle de chauffe avant que la température de rebond ait été atteinte sur la base d'une indication du type de chargement à chauffer.

13. Une méthode de chauffe d'une charge de feuilles de verre (102) dans un four à feuilles de verre architectural oscillant (100), en particulier pour une trempe et/ou un bombage ultérieur comprenant :
- le transport du chargement de feuilles de verre à travers le four le long d'un transporteur substantiellement horizontal ;
- la soumission du chargement de feuilles de verre dans le four à un rayonnement produit par des éléments chauffants à rayonnement supérieurs (104) et des éléments chauffants à rayonnement inférieurs (103) positionnés respectivement pour chauffer une surface supérieure et une surface inférieure du chargement de feuilles de verre par rayonnement ;
**caractérisée par**
- la direction d'air soufflé à convection forcée vers la surface supérieure du chargement de feuilles de verre dans une zone de haute convection (401) s'étendant depuis une portion centrale du four dans toutes les directions vers une périphérie interne du four sélectionnée à partir (i) de la périphérie interne physique du four (404) et (ii) de la périphérie d'une zone du four dans laquelle la charge peut osciller durant un cycle de chauffe ;
- la surveillance d'une indication comme quoi la charge de feuilles de verre s'étendra à l'intérieur d'une zone de basse convection entourant entièrement la zone de haute convection et positionnée entre la zone de convection à haute chaleur et la périphérie interne sélectionnée du four ; et
- si ladite indication indique que la charge de feuilles de verre s'étendra à l'intérieur de la zone de basse convection, la direction d'air soufflé à convection forcée vers la surface supérieure du chargement de feuilles de verre dans la zone de basse convection.

14. Une méthode de chauffe d'une charge de feuilles de verre (102) dans un four à feuilles de verre architectural oscillant (100), en particulier pour une trempe et/ou un bombage ultérieur et de préférence selon la revendication 13 comprenant les étapes de :
- transporter du chargement de feuilles de verre à travers le four le long d'un transporteur substantiellement horizontal ;
- soumettre la charge de feuilles de verre dans le four à un rayonnement produit par des éléments chauffants à rayonnement supérieurs (104) et des éléments chauffants à rayonnement inférieurs (103) positionnés respectivement pour chauffer une surface supérieure et une surface inférieure du chargement de feuilles de verre par rayonnement ;
- diriger l'air soufflé à convection forcée vers la surface supérieure du chargement de feuilles de verre selon un modèle de soufflage ;
- surveiller une indication de la température du four en une position de surveillance du cycle de chauffe à l'intérieur du four, la position verticale de la position de surveillance du cycle de chauffe se trouvant entre un plan d'éléments chauffants par rayonnement (103) et un plan le long duquel la charge de feuilles de verre est transportée à l'intérieur du four ;
- déterminer à partir de l'indication de température du four dans la position de surveillance du cycle de chauffe le point dans le cycle de chauffe de la feuille de verre auquel la température du four dans la position de surveillance du cycle de chauffe a atteint la température de rebond ; et
- réduire la chaleur fournie au chargement de feuilles de verre par la convection d'air forcée une fois que la température de rebond dans le cycle de chauffe a été franchie.

15. Une méthode selon la revendication 14, comprenant les étapes de :
- surveiller une indication de température du four (100) en une position de surveillance du cycle de chauffe une fois que la température de rebond dans le cycle a été franchie ; et
- réguler la quantité de chaleur fournie au chargement de feuilles de verre par la convection d'air forcée en un point dans le cycle de chauffe après que la température de rebond dans le cycle de chauffe a été franchie sur la base d'une fonction comprenant une comparaison entre (i) la différence entre la température de rebond et une température t₀ détectée vers le début du cycle de chauffe et (ii) la différence entre la température en temps réel indiquée par le dispositif de surveillance du rebond de température et la température de rebond.
